(19) Europäisches Patentamt
European Patent Office
Office européen des brevets

(11) EP 2 466 096 A1

(12) EUROPEAN PATENT APPLICATION

(43) Date of publication:
20.06.2012 Bulletin 2012/25

(51) Int Cl.:
F02C 7/047 (2006.01)          F02C 6/08 (2006.01)
F04D 27/02 (2006.01)

(21) Application number: 11194711.5

(22) Date of filing: 20.12.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 20.12.2010 IT MI20102329

(71) Applicant: Ansaldo Energia S.p.A.
Genova (IT)

(72) Inventors:
• Pesce, Paolo
16152 GENOVA (IT)
• Silingardi, Andrea
16146 GENOVA (IT)

(74) Representative: Jorio, Paolo et al
Studio Torta S.p.A.
Via Viotti, 9
10121 Torino (IT)

(54) **Plant for the production of electric power and method for operating said plant**

(57)     A plant (1) for the production of electric power is provided with:
- a compressor (3) comprising an air intake (12), an inlet stage (13), which has a plurality of inlet adjustable stator vanes (18), and an output stage (14);
- an anti-icing device (8) provided with:
a re-circulating system (20), configured to draw air from the output stage (14) of the compressor (3) and to inject it into an injection zone (17) of the air intake (12) of the compressor (3);

a control unit (21) configured to selectively activate the re-circulating system (20) on the basis of at least a first parameter ($IGV_{POS}$) correlated to the position of the inlet adjustable stator vanes (18).

FIG. 1

EP 2 466 096 A1

**Description**

The present invention relates to a plant for the production of electric power and to a method for operating said plant.

Plants for the production of electric power are known comprising a compressor, provided with an air intake, an inlet stage and an output stage, and an anti-icing device, configured to draw air from the output stage of the compressor and inject it into an injection zone of the air intake of the compressor.

The anti-icing device is intended to heat the intake air of the compressor to avoid the generation of condensation during the first inlet stages of the compressor.

The first inlet stage of the compressor is indeed provided with a plurality of inlet adjustable stator vanes, which deflect the inlet air flow, expanding, and thus cooling it.

If the temperature outside the plant is about 0°C, the expansion of the air in the inlet stage may cause the condensation of the humidity contained in the air.

The condensed water impacts at high speed against the vanes of the compressor arranged downstream of the inlet stage and erodes the vane surface. This causes a structural weakening of the vanes and a decrease of the overall performance of the compressor.

Normally, the anti-icing device is activated when the ambient temperature in the plant is comprised between -5°C and +5°C, so as to avoid the generation of condensation in the inlet stage.

However, the drawing of air from the output stage of the compressor, while preserving the integrity of the vanes of the compressor, considerably decreases plant performance. Indeed, the heating of the air in the air intake occurs to the detriment of the overall power delivered by the plant. The more air is re-circulated, the less power is generated by the plant the fuel consumption being equal.

Thus, it is an object of the present invention to minimize the intervention of the anti-icing device so as to preserve the integrity of the vanes of the compressor without excessively penalizing the efficiency of the plant.

In accordance with such objects, the present invention relates to an electric power plant comprising:

- a compressor comprising an air intake, an inlet stage, which has a plurality of inlet adjustable stator vanes, and an output stage;
- an anti-icing device comprising:

a re-circulating system, configured to draw air from the output stage of the compressor and to inject it into an injection zone of the air intake of the compressor; a control unit configured to selectively activate the re-circulating system on the basis of at least a first parameter correlated to the position of the inlet adjustable stator vanes.

It is a further object of the present invention to provide a method for operating the plant for the production of electric power which guarantees the structural integrity of the compressor vanes without excessively penalizing the efficiency of the plant.

In accordance with such objectives, the present invention relates to a method for operating a plant for the production of electric power comprising a compressor provided with an air intake, with an inlet stage, having a plurality of inlet adjustable stator vanes, and with an output stage; the method comprising the steps of:

- drawing air from the output stage of the compressor and injecting it into an injection zone of the air intake of the compressor through a re-circulating system; and
- selectively activating the re-circulating system on the basis of at least a first parameter correlated to the position of the inlet adjustable stator vanes.

Further features and advantages of the present invention will be apparent from the following description of a non-limitative embodiment thereof, with reference to the figures of the attached drawings, in which:

- figure 1 diagrammatically shows a plant for the production of electric power according to the present invention;
- figure 2 is a more detailed block chart of a detail of the plant in figure 1;
- figure 3 is a more detailed block chart of a detail of the plant in figure 1.

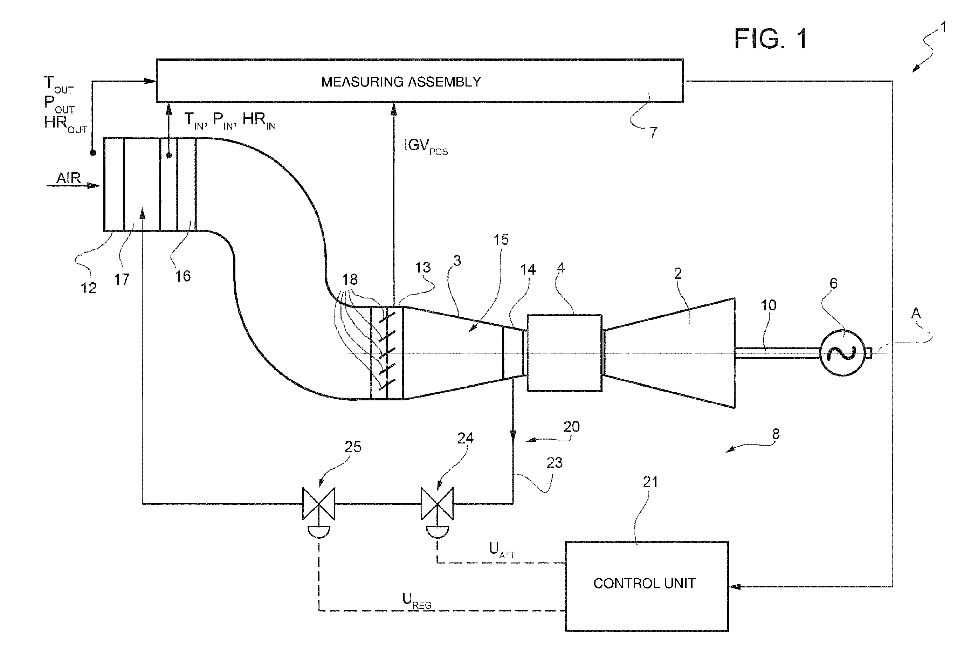

In figure 1, reference numeral 1 indicates a plant for the production of electric power as a whole.

The plant 1 comprises a gas turbine 2 extending along an axis A, a compressor 3, a combustion chamber 4, a generator 6, a detection assembly 7 and an anti-icing device 8.

The gas turbine 2 and the compressor 3 are fitted on the same shaft 10, which turns about the axis A and is connected to the generator 6, which transforms the mechanical power supplied by the gas turbine 2 into output electric power.

The compressor 3 is preferably a multistage axial compressor.

In particular, the compressor 3 extends along axis A and comprises an air intake 12, and inlet stage 13 and an output stage 14 and a plurality of intermediate stages 15 (not shown in detail in figure 1), comprised between the inlet stage 13 and the output stage 14 and is provided with a plurality of stator vanes and rotor vanes (not shown for the sake of simplicity in the accompanying figures).

The air intake 12 is provided with a filter 16 and an injection zone 17, arranged downstream of the filter 16.

The inlet stage 13 comprises a plurality of inlet adjustable stator vanes (diagrammatically shown in figure 1), commonly known as IGV (Inlet Guide Vane), the inclination of which may be modified to adjust the intake air flow of the compressor 3 itself.

In particular, the inlet adjustable stator vanes 18 are respectively coupled to the ends of an inner ring and an outer ring (not shown for the sake of simplicity in the accompanying figures), which are centered on axis A. The inlet adjustable stator vanes 16 are preferably but not necessarily equally distanced from one another.

The inclination of the inlet adjustable stator vanes 18 is adjusted by an adjustment assembly (not shown in the accompanying figures), which is configured to move the inlet adjustable stator vanes 18 in a plurality of positions comprised between a closing position, in which the inlet adjustable stator vanes 18 are oriented so that the incoming air flow in the compressor 3 is minimum, and an opening position, in which the inlet adjustable stator vanes 18 are oriented so that the air flow into the compressor 3 is maximum.

The detection assembly 7 comprises a plurality of sensors of the plant 1 configured to detect a series of parameters related to the plant 1.

In particular, the detection assembly 7 comprises:

a position transducer (not shown for the sake of simplicity in the accompanying figures), configured to measure the position $IGV_{POS}$ of the inlet adjustable stator vanes 18;

a temperature sensor (not shown for the sake of simplicity in the accompanying figures), configured to measure the outer air temperature $T_{OUT}$ upstream of the air intake;

a relative humidity sensor (not shown for the sake of simplicity in the accompanying figures), configured to measure the outer air relative humidity $HR_{OUT}$ upstream of the air intake;

a pressure sensor (not shown for the sake of simplicity in the accompanying figures), configured to measure the outer air pressure $P_{OUT}$ upstream of the air intake;

a temperature sensor (not shown for the sake of simplicity in the accompanying figures) configured to detect the inner air temperature $T_{IN}$ downstream of the injection zone 17 and upstream of the filter 16 of the air intake 12;

a relative humidity sensor (not shown for the sake of simplicity in the accompanying figures), configured to measure the inner air relative humidity $HR_{IN}$ downstream of the injection zone 17 and upstream of the filter 16 of the air intake 12;

a pressure sensor configured to measure the inner air pressure $P_{IN}$ downstream of the injection zone 17 and upstream of the filter 16 of the air intake 12.

The anti-icing device 8 comprises a re-circulating system 20, which is configured to draw air from the outlet stage 14 of the compressor 3 and inject it into the injection zone 17 of the air intake 12 of the compressor 3, and a control unit 21, which is configured to selectively activate the re-circulating system 20 to adjust the air flow rate $Q_{AIR}$ to be drawn from the output stage 14.

In greater detail, the re-circulating system 20 comprises a drawing line 23, which connects the output stage 14 to the injection zone 17 of the air intake 12, a first valve 24 and a second valve 25.

A first valve 24 and the second valve 25 are arranged in series along the drawing line 23.

In particular, the first valve 24 is an ON-OFF type valve controlled by the control unit 21 through an activation signal $U_{ATT}$, while the second valve 25 is a regulating valve controlled by the control unit 21 through a regulation signal $U_{REG}$.

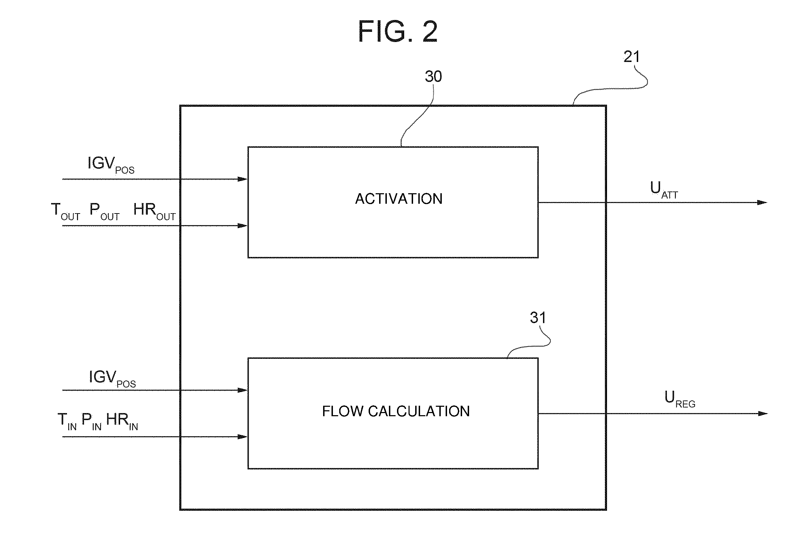

With reference to figure 2, the control unit 21 comprises an activation module 30 and a flow rate calculation module 31.

The activation module 30 is selectively configured to activate the re-circulating system 20 according to at least one first parameter correlated to the position $IGV_{POS}$ of the inlet adjustable stator vanes 18, on the basis of a second parameter correlated to the outer air temperature $T_{OUT}$ measured upstream of the air injection zone 17 of the air intake 12, on the basis of a third parameter correlated to the relative humidity $HR_{OUT}$ measured upstream of the air injection zone 17 of the air intake 12 and on the basis of a fourth parameter correlated to the air pressure $P_{OUT}$ upstream of the air injection zone 17 and of the air intake 12.

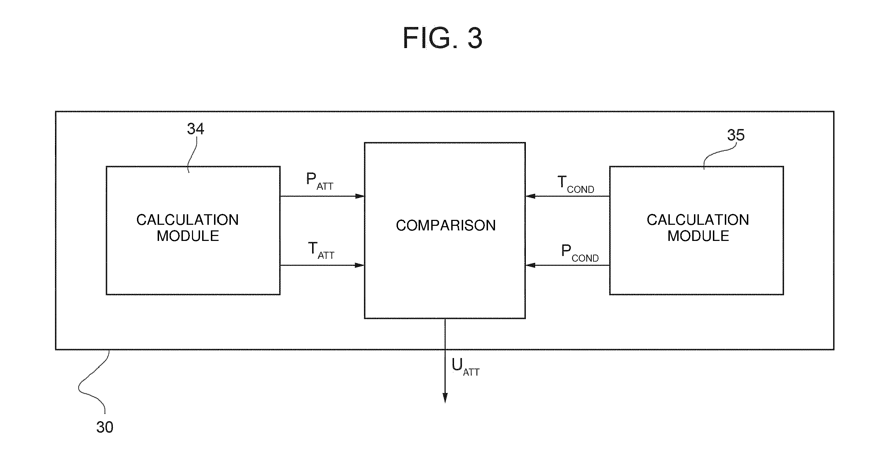

With reference to figure 3, the activation module 30 comprises a first calculation module 34, a second calculation module 35 and a comparing module 36. The first calculation module 34 is configured to calculate a current temperature $T_{ATT}$ and a current pressure $P_{ATT}$ downstream of the inlet stage 13 of the compressor 3.

The current temperature $T_{ATT}$ and the current pressure $P_{ATT}$ are calculated on the basis of the data related to the outer environment conditions (by means of the outer air temperature $T_{OUT}$, the outer air relative humidity $HR_{OUT}$, and the outer air pressure $P_{OUT}$) and on the basis of the position of the inlet adjustable stator vanes 18 and on the basis of the features of the compressor 3 used (specific curves and/or experimental data already inserted in the calculation module 34).

Preferably, the current temperature $T_{ATT}$ and the current pressure $P_{ATT}$ are calculated by means of polynomial functions of the type:

$$T_{ATT} = \alpha \ (T_{OUT}, \ HR_{OUT}, \ P_{OUT}, \ IGV_{POS})$$

$$P_{ATT} = \beta \ (T_{OUT}, \ HR_{OUT}, \ P_{OUT}, \ IGV_{POS})$$

The calculation module 35 is configured to calculate a condensation temperature $T_{COND}$ downstream of the inlet stage 13 and a condensation pressure $P_{COND}$ and a current temperature $T_{ATT}$ downstream of the inlet stage 13.

In practice, the calculation module 35 is configured to calculate the critical temperature and pressure conditions, at which the condensation of the water contained in the inlet air into the compressor 3 is checked.

The condensation temperature $T_{COND}$ and the condensation pressure $P_{COND}$ are calculated on the basis of the data related to the outer environment conditions (by means of an outer air temperature $T_{OUT}$, the outer air relative humidity $HR_{OUT}$, and the outer air pressure $P_{OUT}$) and on the basis of the position of the inlet adjustable stator vanes 18 and on the basis of an air psychrometric chart (stored in the calculation module 35).

Preferably, the condensation temperature $T_{COND}$ and the current pressure $P_{COND}$ are calculated by means of polynomial functions of the type:

$$T_{COND} = \gamma \ (T_{OUT}, \ HR_{OUT}, \ P_{OUT}, \ IGV_{POS})$$

$$P_{COND} = \delta \ (T_{OUT}, \ HR_{OUT}, \ P_{OUT}, \ IGV_{POS})$$

The comparison module 36 is configured to compare the condensation temperature $T_{COND}$ with the current temperature $T_{ATT}$ and the condensation pressure with the current pressure and generating an activation signal $U_{ATT}$ to activate the first valve 24 if the current temperature $T_{ATT}$ falls within a first critical range INT1 including the condensation temperature $T_{COND}$ and if the current pressure $P_{ATT}$ falls within a second critical range INT2 comprising the condensation pressure $P_{COND}$.

Preferably, the first critical range INT1 is equal to $T_{COND} \pm 3°C$, while the second critical range INT2 is equal to $P_{COND} \pm 0.3$ bar.

With reference to figure 2, the flow rate calculation module 31 is configured to calculate a regulation signal $U_{REG}$ to the valve 25 so that to the injection zone 17 is supplied by an air flow rate $Q_{AIR}$ such to increase the air temperature let into the compressor 3 to a reference temperature $T_{SETPOINT}$. The value of the flow rate $Q_{AIR}$ and the consequent regulation signal is calculated on the basis of the position $IGV_{POS}$ of the adjustable stator vanes 18 and on the basis of the air conditions downstream of the injection zone 17. The air conditions downstream of the injection zone 17 are determined on the basis of the inner air temperature $T_{IN}$ downstream of the injection zone 17, of the inner air relative humidity $HR_{IN}$ downstream of the injection zone 17 and of the inner air pressure $P_{IN}$ downstream of the injection zone 17.

It is finally apparent that changes and variations may be made to the plant described herein without departing from the scope of protection of the appended claims.

**Claims**

1. Plant (1) for the production of electric power comprising:

   - a compressor (3) comprising an air intake (12), an inlet stage (13), which has a plurality of inlet adjustable

**4**

stator vanes (18), and an output stage (18);
- an anti-icing device (8) comprising:

> a re-circulating system (20), configured to draw air from the output stage (18) of the compressor (3) and to inject it into an injection zone (17) of the air intake (12) of the compressor (3);
> a control unit (21) configured to selectively activate the re-circulating system (20) on the basis of at least a first parameter ($IGV_{POS}$) correlated to the position of the inlet adjustable stator vanes (18).

2. Plant according to claim 1, wherein the control unit (21) is configured to selectively activate the re-circulating system (20) on the basis of a second parameter correlated to the outer air temperature ($T_{OUT}$) measured upstream of the injection zone (17) of the air intake (12).

3. Plant according to claim 1 or 2, wherein the control unit (21) is configured to selectively activate the re-circulating system (20) on the basis of a third parameter correlated to the outer relative humidity ($HR_{OUT}$) measured upstream of the injection zone (17) of the air intake (12).

4. Plant according to any one of the preceding claims, wherein the control unit (21) is configured to selectively activate the re-circulating system (20) on the basis of a fourth parameter correlated to the outer air pressure ($P_{OUT}$) measured upstream of the injection zone (17) of the air intake (12).

5. Plant according to any one of the preceding claims, wherein the control unit (21) comprises a first calculation module (34) configured to calculate a current temperature ($T_{ATT}$) and a current pressure ($P_{ATT}$) downstream of the inlet stage (13) of the compressor (3).

6. Plant according to claim 5, wherein the control unit (21) comprises a second calculation module (35) configured to calculate a condensation temperature ($T_{COND}$) and a condensation pressure ($P_{COND}$) downstream of the inlet stage (13) of the compressor (3).

7. Plant according to claim 6, wherein the control unit (21) comprises a comparing module (36) configured to compare the condensation temperature ($T_{COND}$) with the current temperature ($T_{ATT}$) and the condensation pressure ($P_{COND}$) with the current pressure ($P_{ATT}$) and to activate the anti-icing device (8) if the current temperature ($T_{ATT}$) falls within a first critical range (INT1) including the condensation temperature ($T_{COND}$) and if the current pressure ($P_{ATT}$) falls within a second critical range (INT2) including the condensation pressure ($P_{COND}$).

8. Plant according to any one of the preceding claims, wherein the control unit (21) comprises a third calculation module (31) configured to calculate the air flow rate that must be drawn by the re-circulating system (20) on the basis of the first parameter correlated to the position ($IGV_{POS}$) of the inlet adjustable stator vanes (18).

9. Plant according to claim 8, wherein the third calculation module (31) is configured to calculate the air flow rate that must be drawn by the re-circulating system (20) on the basis of a fifth parameter correlated to inner air temperature ($T_{IN}$) measured downstream of the injection zone (17) of the air intake (12), on the basis of a sixth parameter correlated to inner relative humidity ($HR_{IN}$) measured downstream of the injection zone (17) of the air intake (12), and on the basis of a seventh parameter correlated to the inner pressure ($P_{IN}$) measured downstream of the injection zone (17) of the air intake (12).

10. Plant according to any one of the preceding claims, wherein the re-circulating system (20) comprises a drawing line (23), which connects the output stage (14) to the injection zone (17) of the air intake (12), and at least one first valve (24) arranged along the drawing line (23) and controlled by the control unit (21).

11. Plant according to claim 10, wherein the first valve (24) is an ON-OFF valve.

12. Plant according to claim 10 or 11, wherein the re-circulating system (20) comprises a second regulating valve (25) controlled by the control unit (21).

13. Method for operating a plant (1) for the production of electric power comprising a compressor (3) provided with an air intake (12), with an inlet stage (13), having a plurality of inlet adjustable stator vanes (18), and an output stage (14); the method comprising the steps of:

drawing air from the output stage (14) of the compressor (3) and injecting it into an injection zone (17) of the air intake (12) of the compressor (3) through a re-circulating system (20); and

selectively activating the re-circulating system (20) on the basis of at least a first parameter correlated to the position ($IGV_{POS}$) of the inlet adjustable stator vanes (18).

14. Method according to claim 13, wherein the step of selectively activating the re-circulating system (20) comprises selectively activating the re-circulating system (20) on the basis of a second parameter correlated to the outer air temperature ($T_{OUT}$) measured upstream of the injection zone (17) of the air intake (12).

15. Method according to claim 13 or 14, wherein the phase of selectively activating the re-circulating system (20) comprises selectively activating the re-circulating system (20) on the basis of a third parameter correlated to the outer relative humidity ($HR_{OUT}$) measured upstream of the injection zone (17) of the air intake (12).

16. Method according to any one of claims 13 to 15, wherein the phase of selectively activating the re-circulating system (20) comprises selectively activating the re-circulating system (20) on the basis of a fourth parameter correlated to the outer air pressure ($P_{OUT}$) measured upstream of the injection zone (17) of the air intake (12).

17. Method according to any one of claims 13 to 16, comprising the step of calculating a current temperature ($T_{ATT}$) and a current pressure ($P_{ATT}$) downstream of the inlet stage (13) of the compressor (3).

18. Method according to claim 17, comprising the step of calculating a condensation temperature ($T_{COND}$) and a condensation pressure ($P_{COND}$) downstream of the inlet stage (13) of the compressor (3).

19. Method according to claim 18, comprising the steps of:

comparing the condensation temperature ($T_{COND}$) with the current temperature ($T_{ATT}$) and the condensation pressure ($P_{COND}$) with the current pressure ($P_{ATT}$); and

activating the re-circulating system (20) if the current temperature ($T_{ATT}$) falls within a first critical range (INT1) including the condensation temperature ($T_{COND}$) and if the current pressure ($P_{ATT}$) falls within a second critical range (INT2) including the condensation pressure ($P_{COND}$).

20. Method according to any one of claims 13 to 19, comprising the step of calculating the air flow rate that must be drawn by the re-circulating system (20) on the basis of the first parameter correlated to the position ($IGV_{POS}$) of the inlet adjustable stator vanes (18).

21. Method according to claim 20, wherein the step of calculating the air flow rate that must be drawn by the re-circulating system (20) comprises calculating the air flow rate that must be drawn by the re-circulating system (20) on the basis a fifth parameter correlated to inner air temperature ($T_{IN}$) measured downstream of the injection zone (17) of the air intake (12), on the basis of a sixth parameter correlated to inner relative humidity ($HR_{IN}$) measured downstream of the injection zone (17) of the air intake (12), and on the basis of a seventh parameter correlated to the inner pressure ($P_{IN}$) measured downstream of the injection zone (17) of the air intake (12).

FIG. 1

MEASURING ASSEMBLY

$T_{OUT}$
$P_{OUT}$
$HR_{OUT}$

$T_{IN}, P_{IN}, HR_{IN}$

$IGV_{POS}$

AIR

1

7

12  17  16

18  13  3  15  14  4  2  10  6

A

20

23

25  24

8

21

$U_{ATT}$

$U_{REG}$

CONTROL UNIT

EP 2 466 096 A1

7

# FIG. 2

FIG. 2

Block 21

ACTIVATION (30)

Inputs: $IGV_{POS}$, $T_{OUT}$, $P_{OUT}$, $HR_{OUT}$ → Output: $U_{ATT}$

FLOW CALCULATION (31)

Inputs: $IGV_{POS}$, $T_{IN}$, $P_{IN}$, $HR_{IN}$ → Output: $U_{REG}$

# FIG. 3

Europäisches
Patentamt

European
Patent Office

Office européen
des brevets

# EUROPEAN SEARCH REPORT

Application Number

EP 11 19 4711

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 180 165 A2 (GEN ELECTRIC [US]) 28 April 2010 (2010-04-28) <br><br> * the whole document * <br> * paragraphs [0015] - [0018], [0020], [0021], [0026], [0027], [0036] * <br> * figures 1,2 * <br> * claims 1,8,9 * <br> ----- | 1-4, 8-11, 13-16,20 | INV. <br> F02C7/047 <br> F02C6/08 <br> F04D27/02 |
| X | EP 2 085 588 A1 (MITSUBISHI HEAVY IND LTD [JP]) 5 August 2009 (2009-08-05) <br> * the whole document * <br> * paragraphs [0025] - [3035], [0036], [0042], [0045] - [0048] * <br> * figures 1,2c,2e * <br> ----- | 1,2,8, 10,11 | |
| A | EP 1 063 402 A2 (GEN ELECTRIC [US]) 27 December 2000 (2000-12-27) <br> * the whole document * <br> * paragraphs [0021] - [0023], [0025], [0033] * <br> * figures 4,5 * <br> ----- | 1-21 | |
| A | DE 10 2005 014565 A1 (ALSTOM TECHNOLOGY LTD BADEN [CH]) 3 November 2005 (2005-11-03) <br> * the whole document * <br> * paragraphs [0009] - [0011], [0022], [0024], [0025] * <br> * figure 1 * <br> ----- | 1-21 | TECHNICAL FIELDS SEARCHED (IPC) <br><br> F02C <br> F01D <br> F04D |
| A | DE 196 22 057 C2 (ENERGIEVERSORGUNG HALLE GMBH [DE]) 16 August 2001 (2001-08-16) <br> * the whole document * <br> * figures 1,2 * <br> ----- | 1-21 | |

The present search report has been drawn up for all claims

| Place of search | Date of completion of the search | Examiner |
|---|---|---|
| The Hague | 27 March 2012 | Gombert, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                  EP 11 19 4711

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2012

| Patent document cited in search report | | Publication date | Patent family member(s) | | Publication date |
|---|---|---|---|---|---|
| EP 2180165 | A2 | 28-04-2010 | AU | 2009227834 A1 | 13-05-2010 |
| | | | CA | 2682865 A1 | 24-04-2010 |
| | | | CN | 101725412 A | 09-06-2010 |
| | | | EP | 2180165 A2 | 28-04-2010 |
| | | | US | 2010101209 A1 | 29-04-2010 |
| EP 2085588 | A1 | 05-08-2009 | CN | 101542092 A | 23-09-2009 |
| | | | EP | 2085588 A1 | 05-08-2009 |
| | | | JP | 4773929 B2 | 14-09-2011 |
| | | | JP | 2008128086 A | 05-06-2008 |
| | | | KR | 20090078833 A | 20-07-2009 |
| | | | US | 2010071372 A1 | 25-03-2010 |
| | | | WO | 2008062678 A1 | 29-05-2008 |
| EP 1063402 | A2 | 27-12-2000 | EP | 1063402 A2 | 27-12-2000 |
| | | | JP | 4571273 B2 | 27-10-2010 |
| | | | JP | 2001020760 A | 23-01-2001 |
| | | | KR | 20010007259 A | 26-01-2001 |
| | | | US | 6226974 B1 | 08-05-2001 |
| DE 102005014565 | A1 | 03-11-2005 | NONE | | |
| DE 19622057 | C2 | 16-08-2001 | AT | 212694 T | 15-02-2002 |
| | | | AU | 3089497 A | 05-01-1998 |
| | | | DE | 19622057 A1 | 04-12-1997 |
| | | | EP | 0902860 A1 | 24-03-1999 |
| | | | ES | 2174260 T3 | 01-11-2002 |
| | | | JP | 2000514518 A | 31-10-2000 |
| | | | US | 2002066275 A1 | 06-06-2002 |
| | | | WO | 9746796 A1 | 11-12-1997 |

EPO FORM P0459

For more details about this annex : see Official Journal of the European Patent Office, No. 12/82